# EUROPÄISCHE PATENTANMELDUNG

(11) **EP 3 460 293 A1**
(43) Veröffentlichungstag der Anmeldung: **27.03.2019**
(21) Anmeldenummer: 18181156.3
(22) Anmeldetag: 02.07.2018
(51) Int. Cl.: F16H 57/021, F16C 19/54, H02K 7/116

(54) **ANTRIEBSANORDNUNG, UMFASSEND EINEN HOCHDREHENDEN ELEKTROMOTOR UND EIN ZAHNRADGETRIEBE**

(30) Priorität: 25.07.2017 DE 102017212724
(71) Anmelder: Robert Bosch GmbH, 70442 Stuttgart (DE)
(72) Erfinder: Matalla, Manuel, 58452 Witten (DE); Baar, Alexander, 58099 Hagen (DE); Pech, Marco, 59427 Unna (DE); Schneidmueller, Alex, 44263 Dortmund (DE)
(74) Vertreter: Thürer, Andreas

(57) **Zusammenfassung**

Die Erfindung betrifft eine Antriebsanordnung, umfassend einen hochdrehenden Elektromotor (1) und ein hieran angekoppeltes Zahnradgetriebe (2) zur Untersetzung der vom Elektromotor (1) erzeugten Eingangsdrehzahl (n_{E}) in eine langsamere Ausgangsdrehzahl (n_{A}), wobei eine an den Elektromotor (1) koaxial angekoppelte Antriebswelle (3) des Zahnradgetriebes (2) über mindestens eine erste Wälzlagerstelle (4a) sowie eine axial beabstandet hiervon angeordnete zweite Wälzlagerstelle (4b) in einem Getriebegehäuse (14) gelagert ist, wobei zur Lagerung der eine maximale Drehzahl von oberhalb 10.000 U/min aufweisenden Antriebswelle (3) die Wälzlagerstellen (4a, 4b) mit je mindestens einem Schrägkugellager (10a, 10a'; 10b) versehen sind, die derart in dem Getriebegehäuse (14) positioniert sind, dass die Schrägkugellager (10a, 10a'; 10b) der Wälzlagerstellen (4a, 4b) entgegengesetzt zum jeweiligen Wellenende hin gerichtete Axialkräfte (F_{A1}; F_{A2}) aufnehmen.

## Beschreibung

Die vorliegende Erfindung betrifft eine Antriebsanordnung, umfassend einen hochdrehenden Elektromotor und ein hieran angekoppeltes Zahnradgetriebe zur Untersetzung der vom Elektromotor erzeugten Eingangsdrehzahl n_{E} in eine langsamere Ausgangsdrehzahl n_{A}, wobei eine an den Elektromotor koaxial angekoppelte Antriebswelle des Zahnradgetriebes über mindestens eine erste Wälzlagerstelle sowie eine axial beabstandet hiervon angeordnete zweite Wälzlagerstelle in einem Getriebegehäuse gelagert ist.

Das Einsatzgebiet der Erfindung erstreckt sich vornehmlich auf die Kraftfahrzeugtechnik. Im Zuge der Elektrifizierung von Antriebssträngen in Kraft- und Nutzfahrzeugen werden vermehrt Elektromotoren mit einer Drehzahl von oberhalb 10.000 U/min eingesetzt. Diese Elektromotoren treiben in der Regel direkt Getriebe an, welche die von den Elektromotoren gelieferten Drehzahlen und Drehmomente wandeln. Die mit der Motorwelle gewöhnlich gleichlaufende Antriebswelle eines meist als Zahnradgetriebe ausgebildeten Getriebes ist bei der hier interessierenden Bauform im Getriebegehäuse gelagert.

### Stand der Technik

Aus der DE 10 201 101 5085A1 geht eine Antriebsanordnung, bestehend aus einem Elektromotor und einem hieran angekoppelten Zahnradgetriebe hervor. Die hier offenbarte Antriebsanordnung ist vorzugsweise für ein Fahrzeug, beispielsweise für ein hybridbetriebenes Personenfahrzeug vorgesehen. Der Elektromotor weist eine Rotorwelle auf, welche rotierend in einem Elektromotorgehäuse gelagert ist. Das Zahnradgetriebe weist eine getriebeeingangsseitige Antriebswelle auf, die in einem Getriebegehäuse drehbar gelagert ist. Dabei ist die getriebeeingangsseitige Antriebswelle koaxial zu der Rotorwelle angeordnet. Die getriebeeingangsseitige Antriebswelle ist mit einem stirnseitigen Ende in eine stirnseitige korrespondierende Aussparung seitens der Rotorwelle eingesteckt und dort über einen Pressverband befestigt. Das Getriebegehäuse ist stirnseitig an dem Elektromotorgehäuse über eine Schraubverbindung lösbar befestigt. Die Lagerung der koaxial zueinander angeordneten Paarung aus Rotorwelle und getriebeeingangsseitiger Antriebswelle erfolgt über insgesamt drei Wälzlagerstellen. Eine erste Wälzlagerstelle ist im Bereich des distalen Endes der Rotorwelle im Elektromotorgehäuse angeordnet. Das distale Ende der im getriebeeingangsseitigen Antriebswelle wird über eine Wälzlagerstelle im Getriebegehäuse drehgelagert. Die dazwischen liegende Wälzlagerstelle ist sowohl dem Elektromotorgehäuse als auch dem Getriebegehäuse zugeordnet und lagert die beiden ineinander gesteckten Endabschnitte von Rotorwelle und getriebeeingangsseitiger Antriebswelle. Das Zahnradgetriebe ist hier nach Art eines Schneckengetriebes ausgebildet, so dass der gewöhnlich recht hochdrehende Elektromotor über das Schneckengetriebe eine starke Untersetzung erfährt, so dass sich die getriebeausgangsseitige Abtriebswelle des Zahnradgetriebes weitaus langsamer dreht als die getriebeeingangsseitige Antriebswelle.

Alle drei Wälzlagerstellen sind hier mit jeweils einem Rillenkugellager versehen, welches in erster Linie eine radiale Lagerung der Rotorwelle sowie der hieran angeschlossenen getriebeeingangsseitigen Antriebswelle durch jedes der Rillenkugellager sowie auch eine Axiallagerung der Wellenkombination gewährleistet.

Die DE 44 36 383A1 offenbart ebenfalls eine Antriebsanordnung mit einem hochdrehenden Elektromotor, welche hier im Rahmen eines Hybridantriebs für ein Kraftfahrzeug zum Einsatz kommt. Der Elektromotor ist mit einer getriebeeingangsseitigen Antriebswelle eines nachgeschalteten Wechselgetriebes verbunden, welches eine eingangsseitige Stirnradstufe aufweist. Diese Antriebsanordnung mit Elektromotor und nachgeschalteter Stirnradstufe sind auf das eine Ende und ein Verbrennungsmotor auf das andere Ende einer Fahrzeugantriebswelle geschaltet. Auch diese Antriebsanordnung bedarf einer Wälzlagerung der getriebeeingangsseitigen Antriebswelle, welche bei dieser Ausführungsform als fliegende Lagerung ausgeführt ist, da das an der getriebeeingangsseitigen Antriebswelle angeschlossene kleinere Zahnrad der Stirnradstufe seitens des distalen Endes der getriebeeingangsseitigen Antriebswelle angebracht ist.

Die EP 965 096 B1 offenbart eine Antriebsanordnung, bei welcher ein direkt an einem Getriebegehäuse eines Seilbahngetriebes angeflanschter Elektromotor als Antriebsmittel verwendet wird. Das Seilbahngetriebe zum Antrieb einer Seilscheibe einer Seilbahn ist mit mehreren in einem vertikal ausgerichteten Getriebegehäuse untergebrachten hintereinander geschalteten Planetenstufen zur Übersetzung der von dem Elektromotor erzeugten Antriebsdrehzahl ins Langsame für die Seilscheibe ausgestattet. Die getriebeeingangsseitige Antriebswelle ist über eine schrägverzahnte Stirnradstufe achsversetzt gegenüber der Getriebeachse angeordnet. Die getriebeeingangsseitige Antriebswelle ist mit beidseits des hierauf befestigten schrägverzahnten Zahnrads axial beabstandet angeordneten Wälzlagerstellen im Getriebegehäuse der Stirnradstufe gelagert. Zwischen der Stirnradstufe und dem Elektromotor ist bei diesem Anwendungsfall noch eine Scheibenbremse angeordnet.

Bei vorbekannten Antriebsanordnungen der gattungsgemäßen Art, deren Zahnradgetriebe Stirnradstufen beinhalten, werden die getriebeeingangsseitig schnell drehenden Antriebswellen gewöhnlich durch Rillenkugellager oder Kegelrollenlager gelagert. Hierbei sind Rillenkugellager durch ihre axiale Tragfähigkeit und Kegelrollenlager durch ihre zulässige Drehzahl limitiert.

### Offenbarung der Erfindung

Es ist die Aufgabe der vorliegenden Erfindung einer Antriebsanordnung der gattungsgemäßen Art dahingehend weiter zu verbessern, dass eine hochdrehende Antriebswelle über eine lange Lebensdauer zuverlässig gelagert wird.

Die Erfindung schließt die technische Lehre ein, dass zur Lagerung der eine maximale Drehzahl von oberhalb 10.000 U/min, vorzugsweise zwischen 10.000 bis 16.000 U/min aufweisenden Antriebswelle, die Wälzlagerstellen mit je mindestens einem Schrägkugellager versehen sind, die derart in dem Getriebegehäuse positioniert sind, dass die Schrägkugellager der Wälzlagerstellen die zu den Wellenenden hin gerichteten Axialkräfte der Schrägverzahnung in beiden Richtungen aufnehmen.

Der Vorteil der erfindungsgemäßen Lösung beruht auf der Tatsache, dass speziell Schrägkugellager, welche einen Druckwinkel von größer als 0° aufweisen, die Möglichkeit bieten, hohe axiale Kräfte bei gleichzeitig hohen Drehzahlen aufzunehmen. Im Rahmen der vorliegenden Erfindung sind mit dem Begriff Schrägkugellager auch sogenannte Spindellager mit einbegriffen, welche als Sonderbauform eines Schrägkugellagers anzusehen sind. Die mit der speziellen Wälzlagerung erzielbaren hohen antriebsseitigen Drehzahlen bieten zudem den Vorteil, einen Elektromotor mit hoher Leistungsdichte auszulegen. Die auf die Wälzlagerstellen wirkenden Axialkräfte ergeben sich aus dem Schrägungswinkel der Verzahnung der antriebsseitigen Getriebestufe. Ein groß bemessener Schrägungswinkel bietet den Vorteil, das Getriebe sehr geräuscharm auszuführen. Je größer der Schrägungswinkel bemessen ist, desto größer werden allerdings auch die Axialkräfte, welche von den Wälzlagerstellen der Antriebswelle aufgenommen werden müssen. Mit der erfindungsgemäßen Wälzlagerung ist dies selbst bei Drehzahlen von oberhalb 10.000 U/min bei gleichzeitig überschaubarem Aufwand in Bezug auf die Schmierstoffzuführung möglich, wie Versuche ergeben haben.

Gemäß einer bevorzugten Ausführungsform der erfindungsgemäßen Hochdrehzahllagerung wird vorgeschlagen, eine oder beide Wälzlagerstellen - vorzugsweise die getriebeeingangsseitige Wälzlagerstelle - mit Schrägkugellagern in Tandem-Anordnung auszustatten, welche Axialkräfte in derselben Wirkrichtung aufnehmen. Das bedeutet, dass die insoweit zwei Schrägkugellager in derselben axialen Wirkrichtung eingebaut sind. Eine Tandem-Anordnung der Schrägkugellager ist in der Lage, eine höhere Lagerlast sowohl in Radial- als auch Axialrichtung aufzunehmen.

Weiterhin ist es auch möglich, dass die Schrägkugellager hinsichtlich zweier benachbarter und axial voneinander beabstandeter Wälzlagerstellen in sogenannter O-Anordnung positioniert sind. Mit der O-Anordnung wird eine maximale Stützweite der beiden axial beabstandet voneinander benachbarten Wälzlagerstellen erzielt. Die Einleitung der Lagervorspannkraft erfolgt in diesem Fall nicht vom Gehäuse her auf den Lageraußenring, sondern von der Antriebswelle her auf den jeweiligen Lagerinnenring der beiden Schrägkugellager.

Vorzugsweise sollte mindestens eine zusätzliche Vorspannscheibe zum Einsatz kommen, welche axial an einen Außenring mindestens eines der außen liegenden Schrägkugellager zur Anlage kommt, um eine axial nach getriebeinnen hin gerichtete Vorspannkraft zu erzeugen. Zusätzlich kann im axial gerichteten Kraftfluss zwischen dem Außenring und dem Getriebegehäuse mindestens eine Feder angeordnet sein, die beispielsweise als mindestens eine Tellerfeder oder als ein Elastomerring ausgebildet sein kann. Hierdurch wird eine annähernd konstante Vorspannung auf die Wälzlageranordnung sichergestellt, so dass der jeweilige Lageraußenring mit den Wälzkörpern und dem Lagerinnenring in der optimalen Betriebsposition gehalten wird.

Es sei darauf verwiesen, dass im Rahmen der vorliegenden Erfindung das Zahnradgetriebe vorzugsweise als ein mehrstufiges Getriebe ausgebildet ist und Getriebestufen umfasst, die vorzugsweise als Stirnradstufe oder auch Planetenstufe ausgebildet sein können. Die getriebeeingangsseitige Getriebestufe ist vorzugsweise schrägverzahnt und als Stirnradstufe ausgebildet, um Geräuschemissionen zu minimieren. Dabei kann die Stirnradstufe ein separates, mit der Antriebswelle lösbar verbundenes schrägverzahntes Zahnrad umfassen. Die Verbindung zwischen dem als Einzelbauteil ausgeführten Zahnrad und der Antriebswelle kann dabei als Steckprofilverbindung ausgeführt sein. Hierdurch lässt sich das besonders hoch beanspruchte, an erster Stelle des Leistungsflusses durch das Getriebe liegende Zahnrad bei Bedarf in einfacher Weise austauschen.

Im Rahmen der vorliegenden Erfindung ist es auch möglich, dass die getriebeeingangsseitige Getriebestufe mit einer sogenannten fliegend gelagerten Antriebswelle ausgebildet ist. Bei der fliegend gelagerten Antriebswelle liegt das abtreibende Zahnrad nicht im Bereich zwischen den vorzugsweise beiden Wälzlagerstellen, sondern außerhalb hiervon.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur leine schematische Seitenansicht einer Antriebsanordnung, umfassend einen hochdrehenden Elektromotor und ein Zahnradgetriebe;
Figur 2 einen Querschnitt durch das Zahnradgetriebe im Bereich der getriebeeingangsseitigen Antriebswelle,
Figur 3 eine schematische Darstellung einer anderen Ausführungsform der erfindungsgemäßen Wälzlagerung in O-Anordnung.

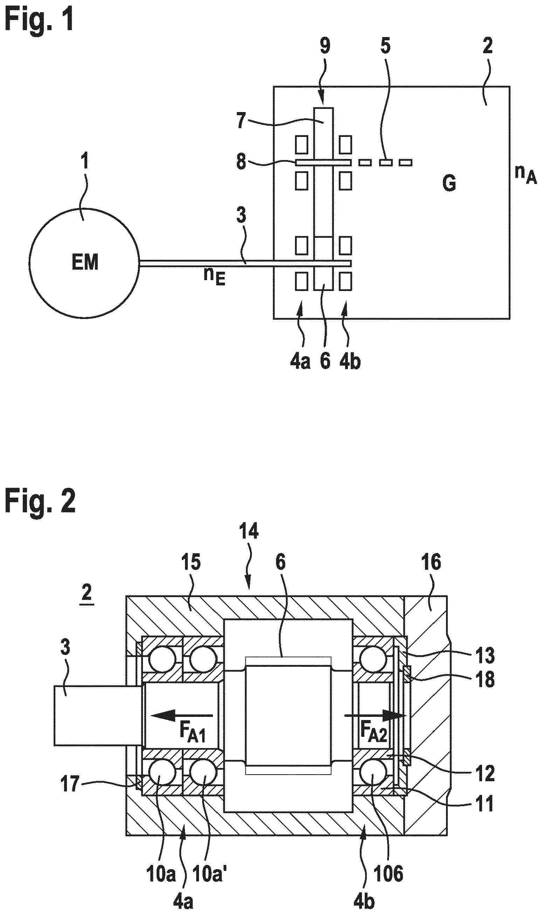

Nach Figur 1 besteht die Antriebsanordnung im Wesentlichen aus einem hochdrehenden Elektromotor 1 als Fahrzeugantrieb, an welchem unmittelbar ein Zahnradgetriebe 2 zur Untersetzung der vom Elektromotor erzeugten Eingangsdrehzahl n_{E} in eine langsamere Ausgangsdrehzahl n_{A} angeflanscht ist.

Eine an dem Elektromotor 1 koaxial angekoppelte Antriebswelle 3 des Zahnradgetriebes 2 ist über eine erste Wälzlagerstelle 4a und eine axial beabstandet hiervon angeordnete zweite Wälzlagerstelle 4b in einem Getriebegehäuse des Zahnradgetriebes 2 gelagert. Bei diesem Ausführungsbeispiel schließen die beiden Wälzlagerstellen 4a und 4b ein schräg verzahntes Stirnrad 6, das mit einem ebenfalls schräg verzahnten Stirnrad 7 einer parallel zur Antriebswelle beabstandet angeordneten Getriebewelle 8 im Zahneingriff steht und eine getriebeeingangseinseitige Getriebestufe 9 bildet. Neben der getriebeeingangseinseitigen schräg verzahnten Getriebestufe 9 können im Rahmen des Zahnradgetriebes 2 noch weitere nachgeschaltete Getriebestufen 5 enthalten sein, was hier nur schematisch angedeutet ist.

Hinsichtlich Figur 2 ist die getriebeeingangseinseitige hochdrehende Antriebswelle 3 des Zahnradgetriebes 2 an beiden Wälzlagerstellen 4a und 4b über Schrägkugellager 10a, 10a' bzw. 10b gelagert. Dabei ist die getriebeeingangseinseitige Wälzlagerstelle 4a mit Schrägkugellagern 10a, 10a' in Tandem-Anordnung ausgestattet, welche Axialkräfte F_{A1} des schrägverzahnten Stirnrades 6 aufnehmen. Demgegenüber nimmt das seitens der Wälzlagerstelle 4b angeordnete Schrägkugellager 10b Axialkräfte F_{A2} in Richtung des zugeordneten Wellenendes auf. Die Aufnahmefähigkeit der Axialkräfte F_{A1} sowie F_{A2} ergibt sich aus der Formgebung des Lageraußenrings 11 in Relation zum Lagerinnenring 12 des Walzlagers 10b (exemplarisch).

Bei diesem Ausführungsbeispiel ist am Außenring 11 des Schrägkugellagers 10b eine Vorspannscheibe 13 angeordnet, um eine axial in Richtung getriebeinnen gerichtete Vorspannkraft auf die Wälzlagerung der Antriebswelle 3 auszuüben. Die Einstellung dieser Vorspannkraft wird dadurch erleichtert, dass das Getriebegehäuse 14 aus einem Hauptgehäuseteil 15 sowie einem lösbar hiermit verbundenen Deckelteil 16 besteht, wobei die Vorspannscheibe 13 benachbart zum Deckelteil 16 angeordnet ist. So kann über eine Auswahl der Scheibendicke der Vorspannscheibe 13 die Vorspannkraft justiert werden. Stattdessen und/oder ergänzend ist im axial gerichteten Kraftfluss zwischen dem Außenring 11 (exemplarisch) der außenliegenden Schrägkugellagerung 10a und 10b und dem Getriebegehäuse 14 beidseitig eine Feder 17 bzw. 18 angeordnet ist, welche hier in Form eines Elastomerrings ausgebildet ist und für eine konstante Vorspannkraft sorgt. Seitens des Schrägkugellagers 10b kommt die diesem zugeordnete Feder 18 an der dem Außenring 11 des Schrägkugellagers 10b gegenüber liegenden Stirnseite der Vorspannscheibe 13 zur Anlage.

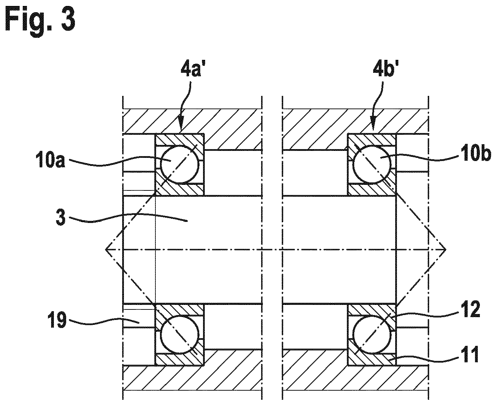

In der Figur 3 dargestellten anderen Ausführungsform der Anordnung von Schrägkugellagern 10a und 10b zur Bildung der beiden axial beabstandet zueinander an der Antriebswelle 3 angeordneten Wälzlagerstellen 4a und 4b wird hier eine O-Anordnung realisiert. Dies bedeutet, dass die durch die Wälzlagerkörper der beiden Schrägkugellager 10a und 10b als Strichpunkt-Linie dargestellten Lastlinien eine in etwa O-Form ergeben und eine hohe Stützweite H gemessen an der Symmetrielinie der Antriebswelle 3 erzeugen. Diese alternative Lagerung wirkt sich axial bauraumsparend aus, da die beiden Wälzlagerstellen 4a' und 4b' enger benachbart angeordnet werden können. Bei der O-Anordnung der Wälzlagerstellen 4a' und 4b' wirkt die Antriebswelle 3 über einen Wellenabsatz von außen auf den Lagerinnenring 12, wogegen das Gehäuse in entgegengesetzte Richtung auf den Lageraußenring wirkt. Die Vorspannung wird bei dieser alternativen Ausführungsform der Wälzlagerung über eine auf ein Außengewinde der Antriebswelle 3 aufgeschraubte Wellenmutter 19 eingestellt.

Die Erfindung ist nicht beschränkt auf die vorstehend vorgeschlagenen Ausführungsbeispiele. Es sind vielmehr auch Abwandlungen hiervon denkbar, welche im Schutzbereich der Ansprüche mit umfasst sind. So ist es beispielsweise auch möglich, eine Feder zur Aufbringung einer Vorspannkraft wegzulassen und auch auf eine optionale Vorspannscheibe zu verzichten, falls die Vorspannkraft der Wälzlagerung auf andere Weise - beispielsweise durch eine Wellenmutter - eingestellt werden kann.

## Patentansprüche

1. Antriebsanordnung, umfassend einen hochdrehenden Elektromotor (1) und ein hieran angekoppeltes Zahnradgetriebe (2) zur Untersetzung der vom Elektromotor (1) erzeugten Eingangsdrehzahl (n_{E}) in eine langsamere Ausgangsdrehzahl (n_{A}), wobei eine an den Elektromotor (1) koaxial angekoppelte Antriebswelle (3) des Zahnradgetriebes (2) über mindestens eine erste Wälzlagerstelle (4a) sowie eine axial beabstandet hiervon angeordnete zweite Wälzlagerstelle (4b) in einem Getriebegehäuse (14) gelagert ist,
**dadurch gekennzeichnet, dass** zur Lagerung der eine maximale Drehzahl von oberhalb 10.000 U/min aufweisenden Antriebswelle (3) die Wälzlagerstellen (4a, 4b) mit je mindestens einem Schrägkugellager (10a, 10a'; 10b) versehen sind, die derart in dem Getriebegehäuse (14) positioniert sind, dass die Schrägkugellager (10a, 10a'; 10b) der Wälzlagerstellen (4a, 4b) zum jeweiligen Wellenende hin gerichtete Axialkräfte (F_{A1}; F_{A2}) aufnehmen.

2. Antriebsanordnung nach Anspruch 1,
**dadurch gekennzeichnet, dass** die getriebeeingangsseitige Wälzlagerstelle (4a) mit Schrägkugellagern (10a, 10a') in Tandem-Anordnung ausgestattet ist, welche Axialkräfte (F_{A1}) in derselben Wirkrichtung aufnehmen.

3. Antriebsanordnung nach Anspruch 1,
**dadurch gekennzeichnet, dass** die Schrägkugellager (10a, 10a'; 10b) hinsichtlich zweier benachbarter und axial voneinander beabstandeter Wälzlagerstellen (4a, 4b) in O-Anordnung positioniert sind, um eine maximale Stützweite (H) der Wälzlagerung zu erzielen.

4. Antriebsanordnung nach Anspruch 1,
**dadurch gekennzeichnet, dass** mindestens eine Vorspannscheibe (13) vorgesehen ist, die axial an einem Außenring (11) mindestens eines der außenliegenden Schrägkugellager (10a; 10b) zur Anlage kommt, um eine axial nach getriebeinnen hin gerichtete Vorspannkraft zu erzeugen.

5. Antriebsanordnung nach Anspruch 4,
**dadurch gekennzeichnet, dass** im axial gerichteten Kraftfluss zwischen dem Außenring (11) und dem Getriebegehäuse (14) mindestens eine Feder (17; 18) angeordnet ist.

6. Antriebsanordnung nach Anspruch 5,
**dadurch gekennzeichnet, dass** die mindestens eine Feder (17; 18) als ein Elastomerring oder eine Tellerfeder ausgebildet ist.

7. Antriebsanordnung nach Anspruch 5,
**dadurch gekennzeichnet, dass** die Feder (17; 18) an der dem Lageraußenring (11) des Schrägkugellagers (10a; 10b) gegenüberliegenden Stirnseite der Vorspannscheibe (13) zur Anlage kommt.

8. Antriebsanordnung nach Anspruch 1,
**dadurch gekennzeichnet, dass** das Getriebegehäuse (14) aus einem Hauptgehäuseteil (15) sowie einem damit lösbar verbundenen Deckelteil (16) besteht, zu welchem die Vorspannscheibe (13) benachbart angeordnet ist.

9. Antriebsanordnung nach Anspruch 1,
**dadurch gekennzeichnet, dass** das Zahnradgetriebe (2) als ein mehrstufiges Getriebe ausgebildet ist, umfassend mehrere Getriebestufen (5, 9), ausgewählt aus einer Gruppe, umfassend: Stirnradstufe, Planetenstufe.

10. Antriebsanordnung nach Anspruch 9,
**dadurch gekennzeichnet, dass** eine getriebeeingangsseitige schrägverzahnte Getriebestufe (9) als eine Stirnradstufe ausgebildet ist.

11. Antriebsanordnung nach Anspruch 10,
**dadurch gekennzeichnet, dass** die Getriebestufe (9) ein separates, mit der Antriebswelle (3) lösbar verbundenes schrägverzahntes Zahnrad (6) umfasst.

12. Antriebsanordnung nach einem der vorstehenden Ansprüche,
**dadurch gekennzeichnet, dass** die getriebeeingangsseitige schrägverzahnte Getriebestufe (9) mit einer fliegend gelagerten Antriebswelle (3) ausgebildet ist.
